# EUROPEAN PATENT APPLICATION

(11) **EP 1 645 613 A1**
(43) Date of publication of application: **12.04.2006**
(21) Application number: 03736090.6
(22) Date of filing: 09.06.2003
(51) Int. Cl.: C10G 5/06, C02F 1/06

(54) **NOVEL FUEL PRODUCTION PLANT AND SEAWATER DESALINATION SYSTEM FOR USE THEREIN**

(71) Applicant: Hitachi, Ltd., Tokyo 100-8280 (JP); JFE Holdings, Inc., Chiyoda-ku, Tokyo 100-0005 (JP)
(72) Inventor: INUI, Taiji c/o Thermal & Hydroelectric Syst. Div., Hitachi-shi, Ibaraki 317-8511 (JP); KAWAGUCHI, T. c/o Thermal & Hydroelectric Syst Div, Hitachi-shi, Ibaraki 317-8511 (JP); YAGI, Hiroshi, c/o JFE Holdings, Inc., Tokyo 100-0005 (JP); ANDO, Yasuto, c/o JFE Holdings, Inc., Tokyo 100-0005 (JP)
(74) Representative: Beetz & Partner
(86) International application number: PCT/JP2003/007263
(87) International publication number: WO 2004/108860

(57) **Abstract**

A novel fuel production plant and a seawater desalination system for use therein in which a water production system using an evaporation method can be applied at a seawater intake amount comparable to that required in system using a reverse osmosis membrane method, the degree of freedom in selecting the plant installation site is high, salinity of produced water is reduced as compared with that in the case using the reverse osmosis membrane method, and the merit of the evaporation water production system having a low maintenance cost can be enjoyed. A novel fuel producing section (100) produces synthesized gas from a feedstock and synthesizes novel fuel from the synthesized gas thus produced, and has exhaust heat recovery boilers (5, 8) for generating steam by recovering excess heat generated from the synthesizing processes. An exhaust heat utilizing section (200) includes steam turbines (9, 12, 17, 18, 21) driven with the steam generated from the exhaust heat recovery boilers (5, 8). An open circulation cooling water supply section (300) supplies cooling water for a plant, including water for cooling exhausts of the steam turbines, and includes a seawater desalination system (38, 39) for desalinating seawater by the evaporation method and supplying desalinated water to replenish the cooling water. The cooling water supplied from the open circulation cooling water supply section is used in condensing of the desalinated water produced by the seawater desalination system 38, 39.

## Description

### Technical Field

The present invention relates to a novel fuel production plant for producing novel fuel, and to a seawater desalination system for use in the plant.

### Background Art

Recently, attention has been focused on plants for producing novel fuel, such as Gas-To-Liquid (GTL) and dimethylether (DME). As a novel fuel production plant, one known example for producing dimethylether by using natural gas as a feedstock is disclosed in, e.g., JP,A 10-195008.

### Disclosure of the Invention

In plants for producing novel fuel, such as GTL and DME, (hereinafter referred to as "novel fuel production plants" or simply as "plants"), for example, a partial oxidation method or an auto-thermal reforming method using hydrocarbons, etc. as a feedstock is employed to produce synthesized gas necessary for synthesizing fuel. In those synthesized gas producing methods, the temperature of the synthesized gas at an outlet of a reaction/reforming furnace is very high (1200 - 1500°C). On the other hand, from the viewpoint of synthesizing fuel in a succeeding stage, the synthesized gas has to be cooled down to synthesizing reaction temperatures (200 - 300°C) at an inlet of a fuel synthesizing reactor. Also, the fuel synthesizing reaction is itself an exothermic reaction. In the novel fuel production plant, therefore, a large amount of excess heat is inevitable generated, thus resulting in the necessity of installing exhaust heat boilers to generate high- and medium-pressure steam for heat recovery. The generated high- and medium-pressure steam can be utilized by steam turbines for driving compressors, pumps, generators, etc. in the plant.

A system using steam turbines requires a large amount of cooling water to condense steam. Hitherto, in facilities requiring a large amount of cooling water, seawater has been used in many cases primarily for the economical reason. However, the merit resulting from using seawater as the cooling water is reduced because of regulations, such as charging for use of seawater and a limitation on the temperature difference between seawater and cooling water (i.e., the difference between the temperature of returned seawater and the temperature of supplied seawater), which have been legislated with recent increasing environmental awareness. The limitation on the temperature difference between seawater and cooling water often increases the amount of required cooling water 3 - 5 times that required in the past. Under such a situation, large-scaled water taking-in equipment has to be installed and the economical merit is lost in most cases. For that reason, it is tried to employ, as a cooling water system for a plant, an open circulation cooling water system provided with a cooling tower, and to minimize the amount of used seawater by compensating for only losses, which are caused due to evaporation, scattering and forced blow from the cooling tower, with desalination of seawater.

In such a try, for the desalination of seawater, a reverse osmosis membrane method is primarily studied because this method requires a less seawater intake amount in spite of accompanying the problems that the remaining salinity is high, a plant cannot be practically installed in some cases depending on properties of seawater, and a membrane occupying about 1/3 of the overall plant cost has to be frequently replaced, thus resulting in a higher maintenance cost. An evaporation method, e.g., a multistage flash method or a multiple effect method, which is a potential candidate utilizing excess low-pressure steam, is not taken into consideration because it requires a seawater intake amount 3 - 4 times that required in a system using the reverse osmosis membrane method for the same amount of produced water even when the intake-discharge temperature difference of seawater is 10°C that has been allowed in the past, and it requires a larger seawater intake amount when the intake-discharge temperature difference of seawater is limited to be lower than 10°C.

An object of the present invention is to provide a novel fuel production plant and a seawater desalination system for use therein in which an evaporation water production system can be applied at a seawater intake amount comparable to that required in a system using the reverse osmosis membrane method, the degree of freedom in selecting the plant installation site is high, salinity of produced water is reduced as compared with that in the case using the reverse osmosis membrane method, and the merit of the evaporation water production system having a low maintenance cost can be enjoyed.

To achieve the above object, the present invention provides a novel fuel production plant for producing synthesized gas from a feedstock and producing novel fuel from the produced synthesized gas, the novel fuel production plant comprising an exhaust heat recovery boiler for generating steam by recovering excess heat generated from the fuel production processes, the novel fuel production plant further comprising an exhaust heat utilizing section including a steam turbine driven with the steam generated from the exhaust heat recovery boiler, an open circulation cooling water supply section for supplying cooling water for a plant, including water for cooling exhaust of the steam turbine, and a seawater desalination system using an evaporation method and supplying desalinated water to replenish the open circulation cooling water, wherein the cooling water supplied from the open circulation cooling water supply section is used in condensing of the desalinated water produced by the seawater desalination system.

With that arrangement, fresh water can be produced at a seawater intake amount comparable to that required in a system using the reverse osmosis membrane method, and the cooling water can be supplied with a lower remaining salinity in the produced water and a lower maintenance cost than those in the case using the reverse osmosis membrane method.

Also, to achieve the above object, the present invention provides a seawater desalination system for desalinating seawater by using an evaporation method and supplying desalinated water, wherein cooling water supplied from an open circulation cooling water supply section is used in condensing of the desalinated water produced by the seawater desalination system.

With that arrangement, fresh water can be produced at a seawater intake amount comparable to that required in a system using the reverse osmosis membrane method, and the cooling water can be supplied with a lower remaining salinity in the produced water and a lower maintenance cost than those in the system using the reverse osmosis membrane method.

### Brief Description of the Drawings

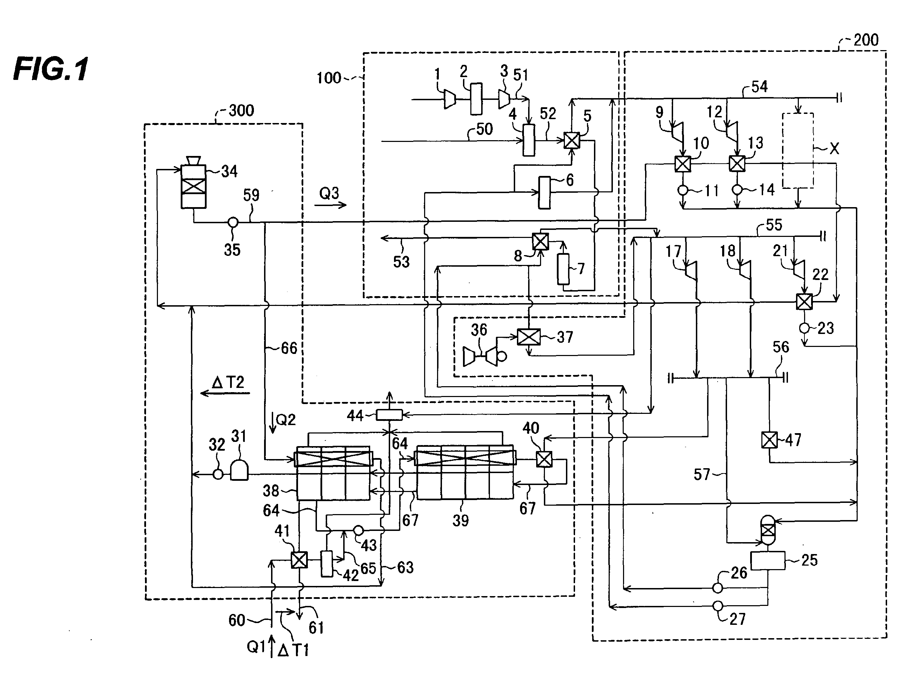

Fig. 1 is a diagram showing the construction of a novel fuel production plant according to one embodiment of the present invention.

### Best Mode for Carrying Out the Invention

The construction of a novel fuel production plant according to one embodiment of the present invention will be described below with reference to Fig. 1.

Fig. 1 is a diagram showing the construction of the novel fuel production plant according to one embodiment of the present invention.

The novel fuel production plant of this embodiment comprises a novel fuel producing section 100, an exhaust heat utilizing section 200, and a cooling water supply section 300. The novel fuel producing section 100 produces new fuel from a feedstock and generates steam by utilizing exhaust heat. In the exhaust heat utilizing section 200, steam turbines are driven using the steam generated by the novel fuel producing section 100, to thereby drive rotary machines, etc. The cooling water supply section 300 supplies cooling water used in condensers for the steam turbines in the exhaust heat utilizing section 200.

The novel fuel producing section 100 comprises an air compressor 1, an air separator 2, an oxygen booster 3, a reaction/reforming furnace 4, exhaust heat recovery boilers 5 and 8, a fuel synthesizing reactor 7, etc.

The feedstock is supplied to the reaction/reforming furnace 4 through a piping 50. Usable raw materials supplied as the feedstock includes, for example, hydrocarbons such as coal, oil and natural gas, biomass, wasted plastics, etc. In this embodiment, natural gas is used as the feedstock. Though not shown, steam, carbon dioxide, etc. may also be supplied in addition to those raw materials. Further, the reaction/reforming furnace 4 is supplied with oxygen through a piping 51. The oxygen is obtained by compressing air by the air compressor 1, separating the compressed air by the air separator 2, and boosting the pressure of the separated oxygen by the oxygen booster 3. In the reaction/reforming furnace 4, synthesized gas mainly consisted of hydrogen and carbon monoxide is produced from the feedstock gas supplied through the piping 50 and the oxygen supplied through the piping 51 by partial oxidation or auto-thermal reforming, for example. The produced synthesized gas is taken out through a piping 52.

The hot synthesized gas thus produced by the reaction/reforming furnace 4 is supplied to the exhaust heat recovery boiler 5 where steam (high-pressure steam) is generated to lower the temperature of the synthesized gas. The synthesized gas is then supplied to the fuel synthesizing reactor 7. In the fuel synthesizing reactor 7, the synthesized gas is further synthesized into novel fuel under the action of a catalyst. The reaction heat generated at this time is recovered by generating steam (medium-pressure steam) in the exhaust heat recovery boiler 8. The novel fuel synthesized by the fuel synthesizing reactor 7, unreacted gases, etc. are sent via a piping 53 to a succeeding liquefying/refining step for liquefaction and refining. The heat of the fuel synthesizing reaction can be recovered from reaction products after exiting the reactor as shown, or can be recovered directly from the interior of the reactor in other cases.

With the above-mentioned synthesized gas production method, the synthesized gas at an outlet of the reaction/reforming furnace 4 has very high temperatures. On the other hand, the fuel synthesizing reaction carried out in the fuel synthesizing reactor 7 of the succeeding stage is an exothermic reaction, and the synthesized gas at an inlet of the fuel synthesizing reactor 7 requires to be cooled down to a temperature suitable for the synthesizing reaction. In the novel fuel production plant, since a large amount of excess heat is generated with that necessity of cooling the synthesized gas, the exhaust heat recovery boilers 5, 8 are installed to generate high- and medium-pressure steam for heat recovery.

The generated high- and medium-pressure steam is used in the exhaust heat utilizing section 200 by the steam turbines for driving compressors, pumps, generators, etc. in the plant. However, low-pressure steam is rather excessive because it is used just as a heat source for a reboiler in a part of equipment for liquefying and refining the fuel synthesizing reaction gas, a heat source for degassing feedwater for a boiler, etc. Also, if many steam condensing turbines are used from the viewpoint of operating the steam turbines with higher efficiency and keeping steam balance in consideration of the less number of heat sources requiring the low-pressure steam, a larger amount of cooling water is required to condense steam correspondingly.

The exhaust heat utilizing section 200 will be described below. The exhaust heat utilizing section 200 comprises a high-pressure steam line, a medium-pressure steam line, and a low-pressure steam line.

The high-pressure steam line is constituted by the exhaust heat recovery boiler 5, a high-pressure boiler 6, and a high-pressure steam header 54. High-pressure steam generated by the exhaust heat recovery boiler 5 is used by a steam turbine 9 for driving the feedstock air compressor 1, a steam turbine 12 for driving the oxygen booster 3, etc. Exhausts of the driving steam turbines 9, 12 are cooled in condensers 10, 13, etc. by plant circulation cooling water, and are returned to a degasser 25 by condensate transfer pumps 11, 14, etc. High-pressure boiler feedwater is withdrawn from the degasser 25 and is boosted up to a predetermined pressure by a high-pressure boiler feedwater pump 27, followed by being supplied to the exhaust heat recovery boiler 5 and the high-pressure boiler 6. Also, medium-pressure boiler feedwater is withdrawn from the degasser 25 and is boosted up to a predetermined pressure by a medium-pressure boiler feedwater pump 26, followed by being supplied to the exhaust heat recovery boiler 8. Additionally, the high-pressure steam that is insufficient from the viewpoint of steam balance is supplied to the high-pressure steam header 54 by the high-pressure boiler 6.

The medium-pressure steam line is constituted by the exhaust heat recovery boiler 8 and a medium-pressure steam header 55. Medium-pressure steam generated by the exhaust heat recovery boiler 8 is used by a pump-driving steam turbine 17, steam turbines 18, 21 for driving process gas compressors, etc. From the viewpoint of steam balance, the pump-driving steam turbine 17, the steam turbine 18 for driving the process gas compressor, etc. operate as backpressure turbines and supply the low-pressure steam to a low-pressure steam header 56. The steam turbine 21 for driving the process gas compressor operates as a condensing turbine. From the viewpoint of steam balance, exhausts of the steam turbine 21 for driving the process gas compressor, etc. are cooled in a condenser 22, etc. by the plant circulation cooling water, and are returned to the degasser 25 by a condensate transfer pump 23, etc.

Here, a condensing turbine may be used as the steam turbine 18. Taking into account the amount of the low-pressure steam used by a brine heater 40, however, of a condensing turbine is used as the steam turbine 18 for driving the process gas compressor, the amount of the supplied low-pressure steam becomes insufficient. For that reason, in this embodiment, a backpressure turbine is used to increase the amount of the supplied low-pressure steam.

The medium-pressure steam line further includes a gas turbine generator 36 and a gas-turbine exhaust heat boiler 37. The gas-turbine exhaust heat boiler 37 generates medium-pressure steam and supplies the generated medium-pressure steam to a medium-pressure steam header 55.

The lower-pressure steam line is constituted by a lower-pressure steam header 56 and supplies the lower-pressure steam, which has been received from the pump-driving steam turbine 17, etc., to a reboiler 47, the degasser 25, etc. The lower-pressure steam is also supplied to the brine heater 40 and utilized as a heat source for a seawater desalination system using the evaporation method. In this case, excess steam is set to zero by adjusting a water production rate in the seawater desalination system using the evaporation method.

The cooling water supply section 300 will be described below. The cooling water supply section 300 comprises a plant open circulation cooling-water line and a water production line.

The plant open circulation cooling-water line is constituted by a cooling tower 34, a cooling water circulation pump 35, and a cooling water circulation piping 59. The cooling water is supplied to the condensers 10, 13, 22, etc. through the cooling water circulation piping 59. The cooling water having temperature raised with heat exchanges in the condensers 10, 13, 22, etc. is cooled in the cooling tower 34 using the atmosphere, and is circulated within the line after pressure is boosted by the cooling water circulation pump 35. A part of the cooling water lost by evaporation during the cooling step in the cooling tower 34 using the atmosphere is replenished from the water production line.

The water production line employs the multistage flash method as one example of the evaporation method. The water production line is constituted by a heat radiating section 38 of a multistage-flash water production system, a heat recovering section 39 of the multistage-flash water production system, the brine heater 40, a seawater/brine heat exchanger 41, a degassing tank 42, a brine circulation pump 43, and a vacuum generator 44.

The heat radiating section 38 of the multistage-flash water production system cools and condenses steam evaporated from circulating brine to recover fresh water. Desalted water thus produced is temporarily stored in a desalted water tank 31 and then supplied as makeup water for the plant circulation cooling-water line by a desalted water supply pump 32. The plant circulation cooling water supplied through a piping 66 is used as a fresh water condensing coolant in the heat radiating section 38 of the multistage-flash water production system. The cooling water exiting the heat radiating section 38 of the multistage-flash water production system is returned to the cooling tower 34 through a piping 63.

The seawater/brine heat exchanger 41 performs heat exchange between seawater supplied through a piping 60 and drain brine discharged through a piping 61 so that the temperature of the discharged brine is lowered and heat is recovered to the supplied seawater. The seawater having passed the seawater/brine heat exchanger 41 is degassed in a degassing tank 42 and then supplied, through a piping 65, to low-temperature circulating brine that is circulated through a low-temperature circulating brine 64.

The low-temperature circulating brine 64 to which seawater has been newly replenished is boosted in pressure by the brine circulation pump 43, and is then introduced to the heat recovering section 39 of the multistage-flash water production system. Here, the low-temperature circulating brine 64 serves to not only cool and condense the steam evaporated from high-temperature circulating brine, but also to recover heat for raising the temperature thereof.

The brine having temperature further raised by the brine heater 40 using the low-pressure steam becomes high-temperature circulating brine 67 that is successively introduced for flashing to respective steps (stages) of both the heat recovering section 39 and the heat radiating section 38 of the multistage-flash water production system, which have been held in lower-pressure states by the vacuum generator 44 using the medium-pressure steam. The high-temperature circulating brine 67 is gradually condensed and cooled while being flashed in the respective stages. Then, a part of the high-temperature circulating brine is blown off externally of the line from the heat radiating section 38 of the multistage-flash water production system through the piping 61, and the remaining high-temperature circulating brine is recirculated as the low-temperature circulating brine 64.

Note that the evaporation method used in the water production line is not limited to the above-described multistage flash method, and the multiple effect method may be used instead. Further, both the multistage flash method and the multiple effect method may be used in a combined manner.

A first feature of the above-described novel fuel production plant of this embodiment resides in that the plant circulation cooling water supplied through the piping 66 is used as the fresh water condensing coolant in the heat radiating section 38 of the multistage-flash water production system. For example, when fresh water is produced at a rate of 750 t/hour in the water production line, the known seawater desalination system using the reverse osmosis membrane method has to take in seawater at a rate of 1500 t/hour, i.e., about twice the rate of the required fresh water, on condition that the known system is one having the highest fresh water recovery rate. On the other hand, if it is assumed that the evaporation method requires a seawater intake amount four times that required by the reverse osmosis membrane method when the temperature difference between the seawater and the cooling water is 10°C, the seawater intake amount required in the known seawater desalination system using the evaporation method is 6000 t/hour. Of 6000 t/hour, 4500 t/hour is the amount of seawater used as the fresh water condensing coolant in the heat radiating section 38 of the multistage-flash water production system, and 1500 t/hour is the amount of seawater required for the water production. In this case, by using the plant circulation cooling water supplied through the piping 66 as the fresh water condensing coolant in the heat radiating section 38 of the multistage-flash water production system, an amount Q1 of seawater to be taken in through the piping 60 is given as 1500 t/hour that is equal to the amount required in the known seawater desalination system using the reverse osmosis membrane method. If the temperature difference between the seawater and the cooling water is limited to 2°C, i.e., to a most tightly controlled level in recent years, the known seawater desalination system using the evaporation method requires a very large seawater intake amount of 24000 t/hour (= 4500 x 10/2 + 1500). However, when the plant circulation cooling water supplied through the piping 66 is used as the fresh water condensing coolant in the heat radiating section 38 of the multistage-flash water production system, the seawater intake amount is not affected by the limitation on the temperature difference between the seawater and the cooling water and remains at 1500 t/hour. Though depending on the cooling capability of the cooling tower 34, it is general that a temperature difference ΔT2 between the cooling water flowing through the piping 66 and the cooling water returned from the piping 63 is set to 10°C. In this case, because the cooling efficiency is increased 5 times as the temperature difference increases 5 times, an amount Q2 of the cooling water supplied to the heat radiating section 38 of the multistage-flash water production system through the piping 66 is given as 4500 t/hour {= (24000 - 1500) t/hour x 1/5}. Since an amount Q3 of the cooling water supplied to the exhaust heat utilizing section 200 from the cooling tower 34 through the piping 59 is, e.g., about 33600 t/hour, the amount Q2 of the cooling water supplied from the piping 66 to the heat radiating section 38 of the multistage-flash water production system through the piping 66 is about 13% of the above-mentioned cooling water amount Q3.

Thus, according to this embodiment, by using the plant circulation cooling water supplied through the piping 66 as the fresh water condensing coolant in the heat radiating section 38 of the multistage-flash water production system, the seawater intake amount can be reduced to a level comparable to that required in the known seawater desalination system using the reverse osmosis membrane method. Also, according to this embodiment, there is no need of considering corrosion resistance to salt contained in the seawater with respect to piping materials for the heat radiating section 38 of the multistage-flash water production system, and hence a relatively inexpensive material can also be used.

A second feature of the present invention resides in that the evaporation method, e.g., the multistage flash method or the multiple effect method, is applied to the water production line for desalinating seawater. With the second feature, replacement of an expensive membrane is no longer required and the maintenance cost of the water production system is reduced. Further, comparing the reverse osmosis membrane method and the evaporation method, it is general that the evaporation method can produce fresh water with a lower remaining salinity than the reverse osmosis membrane method. As a result, the maintenance cost of the cooling water line is also reduced.

A third feature of this embodiment resides in that a backpressure turbine is used as the steam turbine 18 for driving the process gas compressor to compensate for the amount of the low-pressure steam consumed by the brine heater 40. With the third feature, the amount of the supplied lower-pressure steam can be increased. Also, since the use of a backpressure turbine eliminates the need of an additional condenser for use with a condensing turbine, the amount of the circulated cooling water is reduced correspondingly. Even though the amount Q2 of the cooling water circulated through the heat radiating section 38 of the multistage-flash water production system is increased by 4500 t/hour as described above, the amount of the circulated cooling water can be reduced by about 1500 t/hour as a result of not using the additional condenser.

A fourth feature of this embodiment resides in that the gas turbine generator 36 is installed as a power supply source for the plant and the gas-turbine exhaust heat boiler 37 is installed to generate the medium-pressure steam. As the power supply source for the plant, a steam turbine can be installed at a position indicated by a symbol X in the drawing similarly to the steam turbine 12. In the case using a steam turbine as the power supply source for the plant, however, that steam turbine has to be constituted in similar arrangement of the driving steam turbine 21, the condenser 13 and the condensate transfer pump 14, and hence an additional condenser is required. Since the use of the gas turbine eliminates the need of an additional condenser, the amount of the circulated cooling water is reduced correspondingly. Even though the amount Q2 of the cooling water circulated through the heat radiating section 38 of the multistage-flash water production system is increased by, e.g., 4500 t/hour as described above, the amount of the circulated cooling water can be reduced by about 3100 t/hour as a result of not using the additional condenser.

Consequently, by using a backpressure turbine as the steam turbine 18, using the gas turbine generator 36 in place of the steam turbine generator, and installing the gas turbine exhaust heat boiler 37, the amount of the circulated cooling water can be reduced by the amount of the cooling water used by the two condensers, i.e., 4600 t/hour (= 1500 t/hour + 3100 t/hour). With this embodiment, as described above, in spite of the amount Q2 of the cooling water supplied through the piping 66 being increased by 4500 t/hour when the plant circulation cooling water supplied through the piping 66 is used as the fresh water condensing coolant in the heat radiating section 38 of the multistage-flash water production system, the amount of the circulated cooling water can be reduced by the amount of the cooling water used by the two condensers, i.e., 4600 t/hour, and therefore the amount of the circulated cooling water can be reduced by 100 t/hour as a whole. Although those numerical values are shown merely by way of example, it is concluded that, even with the amount of the cooling water increased by using the plant circulation cooling water supplied through the piping 66 as the fresh water condensing coolant in the heat radiating section 38 of the multistage-flash water production system, the total amount of the circulated cooling water can be reduced to a level comparable to or smaller than that in the system using the reverse osmosis membrane method by modifying the other arrangement.

Further, by using the gas turbine generator as the power supply source for the plant, the novel fuel production plant of this embodiment can be started up on a stand-alone basis, thus resulting in higher operability of the plant. Also, since the use of the evaporation method in the water production system eliminates the need of a high-pressure seawater pump consuming a large quantity of power, which has been required in the reverse osmosis membrane system, the output power of the generator can be reduced by about 15%. Additionally, since a gas turbine is used as a generator driver, the amount of the required high-pressure steam can be reduced correspondingly and so can be the capacity in operation of the high-pressure boiler.

A fifth feature of this embodiment resides in that the lower-pressure steam generated in the exhaust heat utilizing section 200 is supplied to and utilized by the brine heater 40 of the multistage-flash water production system. Here, if the lower-pressure steam is excessive, the excess steam can be consumed by changing a water production rate of the water production system, or it can be eliminated by optimizing the steam balance. In the case adjusting the water production rate, if the lower-pressure steam is excessive and the water production rate can be adjusted to a lower value, it is also possible to reduce the number of stages and the number of evaporators in the water production system, thereby cutting the equipment cost.

A sixth feature of this embodiment resides in that the seawater/brine heat exchanger 41 is installed to perform heat exchange between the brine discharged from the evaporation water production system and the seawater supplied to it. With the sixth feature, heat can be recovered and the temperature of the discharged brine can be kept not higher than a predetermined value when the intake-discharge temperature difference of seawater is specified as a result of control for environmental protection.

Thus, it is possible to optimize the steam balance of the plant, to eliminate the excess steam in the plant, and to increase the overall thermal efficiency of the plant by changing a part of steam turbine driven machines to a gas turbine driven machine, changing a part of condensing turbines to a backpressure turbine, recovering heat from the discharged brine, and adjusting the water production rate of the evaporation water production system.

The seawater desalination system according to this embodiment is intended to desalinate seawater by using the evaporation method and to supply the desalinated water for replenishment of the cooling water, and it is featured in that the cooling water supplied from the open circulation cooling water supply section is used in condensing of the desalinated water produced by the seawater desalination system. The seawater desalination system can be employed not only to supply the cooling water in the novel fuel production plant, but also as a fresh water supply source in an oil refinery, a chemical plant, a steam-turbine power generation plant, etc.

### Industrial Applicability

According to the present invention, in a novel fuel production plant and a seawater desalination system for use therein which are installed in a district undergoing restriction in use of seawater, a water production system using the evaporation method can be employed with a seawater intake amount comparable to that required in a system using the reverse osmosis membrane method, and the merit of the evaporation water production system having a lower maintenance cost than the reverse osmosis membrane method can be enjoyed.

## Claims

1. A novel fuel production plant for producing synthesized gas from a feedstock and producing novel fuel from the produced synthesized gas, said novel fuel production plant comprising an exhaust heat recovery boiler for generating steam by recovering excess heat generated from the fuel production processes, said novel fuel production plant further comprising:
an exhaust heat utilizing section including a steam turbine driven with the steam generated from said exhaust heat recovery boiler,
an open circulation cooling water supply section for supplying cooling water for a plant, including water for cooling exhaust of said steam turbine, and
a seawater desalination system using an evaporation method and supplying desalinated water to replenish the open circulation cooling water,
wherein the cooling water supplied from said open circulation cooling water supply section is used in condensing of the desalinated water produced by said seawater desalination system.

2. The novel fuel production plant according to Claim 1, wherein the evaporation method used in said seawater desalination system is a multistage flash method, a multiple effect method, or a combination of both the methods.

3. The novel fuel production plant according to Claim 1, wherein a gas turbine is used to drive a machine to be driven.

4. The novel fuel production plant according to Claim 3, further comprising a gas turbine exhaust heat boiler for generating steam with exhaust heat of said gas turbine,
wherein the steam generated by said gas turbine exhaust heat boiler is supplied to said exhaust heat utilizing section.

5. The novel fuel production plant according to Claim 1, further comprising a heat exchanger for performing heat exchange between brine discharged from said seawater desalination system and seawater as feed material supplied to said seawater desalination system.

6. The novel fuel production plant according to Claim 1, wherein a water production rate of said seawater desalination system is modified such that excess steam generated in said plant is consumed as a heat source for said seawater desalination system.

7. A seawater desalination system for desalinating seawater by using an evaporation method and supplying desalinated water,
wherein cooling water supplied from an open circulation cooling water supply section is used in condensing of the desalinated water produced by said seawater desalination system.
